# EUROPEAN PATENT APPLICATION

(11) **EP 4 610 385 A1**
(43) Date of publication of application: **03.09.2025**
(21) Application number: 23907712.6
(22) Date of filing: 20.12.2023
(51) Int. Cl.: C22C 38/34, C22C 38/28, C22C 38/32, C22C 38/00, C21D 8/06, C21D 1/18

(54) **SPRING STEEL WIRE WITH IMPROVED PERMANENT DEFORMATION RESISTANCE AND MANUFACTURING METHOD THEREFOR**

(30) Priority: 21.12.2022 KR 20220180915
(71) Applicant: POSCO Co., Ltd, Pohang-si, Gyeongsangbuk-do 37859 (KR)
(72) Inventor: CHUN, Youngsoo, Pohang-si Gyeongsangbuk-do 37669 (KR); CHOI, Myungsoo, Pohang-si Gyeongsangbuk-do 37669 (KR); PARK, Sewon, Pohang-si Gyeongsangbuk-do 37881 (KR); KIM, Daehwan, Pohang-si Gyeongsangbuk-do 37764 (KR)
(74) Representative: Nederlandsch Octrooibureau
(86) International application number: PCT/KR2023/021050
(87) International publication number: WO 2024/136429

(57) **Abstract**

A spring steel wire with improved permanent deformation resistance, according to an embodiment, comprises, by weight percent, C: 0.39-0.51%, Si: 1.30-1.70%, Mn: 0.20-0.45%, P: 0.015% or less, S: 0.020% or less, Cr: 0.50-0.80%, Ti: 0.015-0.030%, B: 0.0010-0.0040%, N: 0.003-0.015%, the remainders being Fe and inevitable impurities, wherein the spring steel wire may have a dislocation density in the range of 6.0x10¹³ to 3.0x10¹⁴ m⁻².

## Description

### [Technical Field]

The present invention relates to a spring steel wire with improved permanent deformation resistance and manufacturing method therefor.

### [Background Art]

Suspension springs are designed to receive repeated fatigue loads in an elastic range below the yield strength, but plastic deformation occurs in local areas, resulting in permanent deformation. The cause of the local plastic deformation is the movement of dislocations due to repeated fatigue loading occurring at stresses below the yield strength.

In the microstructure of currently commercialized springs, tempered martensite structures with excellent resistance to permanent deformation are utilized. Tempered martensite structures have excellent permanent deformation resistance because carbides formed during tempering restrict the movement of dislocations.

Conventionally, carbide elements such as Mo, V, and W were added as single elements to improve the permanent deformation resistance of tempered martensite structure steels. However, the addition of large amounts of these relatively expensive carbide elements may reduce price competitiveness. Therefore, there is a need to develop a technology that may optimize the amount of carbide elements and provide a manufacturing method accordingly.

### [Disclosure]

### [Technical Problem]

To resolve the above-described issues, the present invention is directed to providing a spring steel wire and a method of manufacturing the same, which have improved permanent deformation resistance by controlling alloy components and a manufacturing process.

### [Technical Solution]

A spring steel wire with improved permanent deformation resistance according to an embodiment may include, in percent by weight (wt%), 0.39 to 0.51% of C, 1.30 to 1.70% of Si, 0.20 to 0.45% of Mn, 0.015% or less of P, 0.020% or less of S, 0.50 to 0.80% of Cr, 0.015 to 0.030% of Ti, 0.0010 to 0.0040% of B, 0.003 to 0.015% of N, the remainder being Fe and inevitable impurities, and have a dislocation density of 6.0x10¹³ to 3.0x10¹⁴ m⁻².

The spring steel wire with improved permanent deformation resistance according to an embodiment may have a value of Expression (1) being greater than 7.

Expression (1): [Si]+1.5[Cr]/[Mn],

In Expression (1), [Si], [Cr], and [Mn] represent the content (wt %) of each component.

The spring steel wire with improved permanent deformation resistance according to an embodiment may include tempered martensite as a microstructure thereof.

The spring steel wire with improved permanent deformation resistance according to an embodiment may have an average thickness of 12 nm or less for precipitated carbides that have a thickness of 100 nm or less

The spring steel wire with improved permanent deformation resistance according to an embodiment may have a permanent deformation of 3.0 mm or less when compressed at a strength of 1274 MPa.

A method of manufacturing a spring steel wire with improved permanent deformation resistance according to an embodiment may include: preparing a billet comprising, in percent by weight (wt%), 0.39 to 0.51% of C, 1.30 to 1.70% of Si, 0.20 to 0.45% of Mn, 0.015% or less of P, 0.020% or less of S, 0.50 to 0.80% of Cr, 0.015 to 0.030% of Ti, 0.0010 to 0.0040% of B, 0.003 to 0.015% of N, the remainder being Fe and inevitable impurities; finish rolling the billet at 880 to 980°C to produce a wire rod; cooling the wire rod; reheating the cooled wire rod to a temperature of at 900 to 980°C and then quenching the reheated wire rod; and tempering the quenched wire rod at a temperature of 220 to 300°C.

The cooling may include: rapidly cooling to a temperature of 630 to 690°C at a rate of 3 to 8°C/s; slowly cooling to a temperature of 580°C at a rate of 1°C/s or less; and air cooling.

### [Advantageous Effects]

According to an embodiment of the disclosed invention, a spring steel wire with improved permanent deformation resistance and a method of manufacturing the same can be provided by controlling alloy components and a manufacturing process.

### [Modes of the Invention]

Hereinafter, examples of the present invention will be described in detail with reference to the accompanying drawings. The following examples are provided to fully convey the spirit of the present invention to a person having ordinary skill in the art to which the present invention belongs. The present invention is not limited to the examples shown herein but may be embodied in other forms. In order to make the description of the present invention clear, unrelated parts are not shown and, the sizes of components are exaggerated for clarity.

Throughout the specification, when a part is referred to as "including", "comprising" and/or "having" a certain element, it is understood that, unless expressed otherwise, the description does not preclude the presence or addition of one or more elements.

The singular form of a noun corresponding to an item may include one or a plurality of the items unless clearly indicated otherwise in a related context.

Hereinafter, the reason for numerically limiting the alloy element contents in the embodiments of the present invention will be described. Unless otherwise specified, the units thereof are expressed in weight percent (wt%).

A spring steel wire with improved permanent deformation resistance according to an embodiment may include, in percent by weight (wt%), 0.39 to 0.51% of C, 1.30 to 1.70% of Si, 0.20 to 0.45% of Mn, 0.015% or less of P, 0.020% or less of S, 0.50 to 0.80% of Cr, 0.015 to 0.030% of Ti, 0.0010 to 0.0040% of B, 0.003 to 0.015% of N, the remainder being Fe and inevitable impurities.

The content of C (carbon) may be 0.39 to 0.51%.

C is an element effective for increasing strength by solid solution strengthening. Considering this, C may be added in an amount of 0.39% or more. However, when the content of C is excessive, the toughness may be lowered, which may cause a sudden brittle fracture. Considering this, the upper limit of the C content may be limited to 0.51%.

The content of Si (silicon) may be 1.30 to 1.70%.

Si may be utilized for deoxidation of steel, and is an element that suppresses the growth of carbides during tempering, thereby enabling an increase in the tempering temperature. Increasing the tempering temperature enables the formation of ultrafine carbides at the target strength, thereby enhancing the precipitation strengthening effect, but may reduce dislocation strengthening effect due to dislocation annihilation. Therefore, when Si is added, the annihilation of mobile dislocations during repeated fatigue may be minimized, thereby improving the permanent deformation resistance. Considering this, Si may be added in an amount of 1.30% or more. However, when the content of Si is excessive, it may cause surface decarburization during the wire rod manufacturing process, which may lower the fatigue strength. Considering this, the content of Si may be limited to 1.70%. Preferably, the content of Si may be 1.32 to 1.68%.

The content of manganese (Mn) may be 0.20 to 0.45%.

Mn is an element that improves hardenability. In addition, the addition of Mn allows S, which is an impurity in steel, to be precipitated as MnS, thereby preventing surface defects by low-melting-point sulfides. Considering this, Mn may be added in an amount of 0.20% or more. However, when the content of Mn is excessive, impact toughness may be lowered. Considering this, the content of Mn may be limited to 0.45%. Preferably, the content of Mn may be 0.23 to 0.39%.

The content of phosphorus (P) may be 0.015% or less.

P is an element that may segregate at grain boundaries and reduce impact toughness. Considering this, the content of P may be limited to 0.015% or less. Preferably, P may be 0.009% or less.

The content of S (sulfur) may be 0.020% or less.

S, like P, is an element that not only segregates at grain boundaries and reduces toughness, but also forms low-melting-point sulfides, thereby inhibiting hot rolling. Considering this, the content of S may be 0.020% or less. Preferably, S may be 0.004% or less.

The content of Cr (chromium) may be 0.50 to 0.80%.

Cr is an element that is effective in ensuring strength by improving hardenability. In addition, Cr is an element that plays a role in suppressing carbide growth during tempering, similar to Si. Considering this, the content of Cr may be added in an amount of 0.50% or more. However, when the content of Cr is excessive, a chromium oxide layer is formed on the surface, which may increase the C/A ratio of the corrosion pit, thereby causing a notch effect. Therefore, an excessive Cr content is not desirable in terms of corrosion fatigue durability. In consideration of this, the upper limit of the Cr content may be limited to 0.80%. Preferably, the Cr content may be 0.53 to 0.79%.

The content of Ti (titanium) may be 0.015 to 0.030%.

Ti may combine with N introduced into the steel to form titanium nitride, thereby preventing B from combining with N. In consideration of this, Ti may be added in an amount of 0.015% or more. However, when the Ti content is excessive, coarse nitride may be formed, resulting in poor impact toughness. In consideration of this, the upper limit of the Ti content may be limited to 0.030%. Preferably, the Ti content may be 0.022 to 0.024%.

The content of B (boron) may be 0.0010 to 0.0040%.

B is an element that enhances hardenability. In consideration of this, B may be added in an amount of 0.0010% or more. However, when the content of B is excessive, Fe₂₃(CB)₆ carbide may be formed at the grain boundaries, leading to embrittlement of the austenite grain boundaries, and promoting surface defects during continuous casting. In consideration of this, the upper limit of the B content may be limited to 0.0040%. Preferably, the content of B may be 0.0018 to 0.0022%.

The content of N (nitrogen) may be 0.003 to 0.015%.

N may combine with Ti added to the steel to form nitrides. Manufacturing with an N content less than 0.003% may lead to increased manufacturing costs. However, when the N content exceeds 0.015%, coarse nitrides may be formed, resulting in poor impact toughness.

The remaining component(s) of the disclosed invention is iron (Fe). However, unintended impurities may inevitably be introduced from raw materials or the surrounding environment in a typical manufacturing process, and thus cannot be excluded. Since such impurities may be well known to those skilled in the art of conventional manufacturing processes, details thereof are not described in this specification. A spring steel wire with improved permanent deformation resistance according to an embodiment may have a dislocation density of 6.0x10¹³ to 3.0x10¹⁴ m⁻²

When the dislocation density is excessively high, dislocation annihilation may occur more readily, which results in poor permanent deformation resistance.

The spring steel wire with improved permanent deformation resistance according to an embodiment may have a value of Expression (1) greater than 7.

Expression (1): [Si]+1.5[Cr]/[Mn]

In Expression (1), [Si], [Cr], and [Mn] represent the content (weight %) of each component.

When the value of Expression (1) is 7 or less, coarse precipitates may be generated, or it may be difficult to satisfy the dislocation density range proposed in the present invention. Therefore, when the value of Expression (1) is 7 or less, permanent deformation resistance may be reduced.

The spring steel wire with improved permanent deformation resistance according to an example may include tempered martensite as a microstructure. The tempered martensite structure may improve permanent deformation resistance by restricting the movement of dislocations through carbides formed during tempering.

The spring steel wire with improved permanent deformation resistance according to an example of the disclosed invention includes carbides precipitated through the alloy composition described above and the manufacturing method described below, in which an average thickness of carbides having a thickness of 100 nm or less may be 12 nm or less.

In the disclosed invention, the average refers to an average value of values measured at ten arbitrary points.

The spring steel wire with improved permanent deformation resistance according to an embodiment may have a permanent deformation of 3.0 mm or less when compressed at a strength of 1274 MPa by controlling the microstructure as described above.

Next, a method of manufacturing a spring steel wire with improved permanent deformation resistance according to another aspect of the disclosed invention is described.

A method of manufacturing a spring steel wire with improved permanent deformation resistance according to an embodiment may include: preparing a billet comprising, in percent by weight (wt%), 0.39 to 0.51% of C, 1.30 to 1.70% of Si, 0.20 to 0.45% of Mn, 0.015% or less of P, 0.020% or less of S, 0.50 to 0.80% of Cr, 0.015 to 0.030% of Ti, 0.0010 to 0.0040% of B, 0.003 to 0.015% of N, the remainder being Fe and inevitable impurities; finish rolling the billet at 880 to 980°C to produce a wire rod; cooling the wire rod; reheating the cooled wire rod to a temperature of 900 to 980°C and then quenching the reheated wire rod; and tempering the quenched wire rod at a temperature of 220 to 300°C.

The reasons for limiting the numerical ranges of the respective alloy compositions are as described above, and the following provides details of manufacturing operations.

The reasons for numerically limiting the component range of each alloy composition are as described above, and the following provides details of manufacturing operations.

After preparing a billet satisfying the above alloy composition, a series of processes including finish rolling, cooling, reheating, quenching, and tempering may be performed.

First, the billet may be finish-rolled at 880 to 980°C to produce a wire rod.

When the finish rolling temperature is low, surface ferrite decarburization may occur. However, when the finish rolling temperature is high, the grain size becomes coarse, making it difficult to implement a desired permanent deformation resistance.

The cooling may include rapidly cooling to a temperature of 630 to 690°C at a rate of 3 to 8°C/s; slowly cooling to a temperature of 580°C at a rate of 1°C/s or less; and air cooling.

In the rapid cooling, rapid cooling is performed to a pearlite transformation region to avoid a temperature region in which surface decarburization is caused by ferrite phase transformation in the surface layer. Therefore, in the rapid cooling, rapid cooling may be performed to a temperature of 630 to 690°C at a rate of 3 to 8°C/s.

When rapid cooling is performed only to a temperature higher than 690°C, surface decarburization may occur in a two-phase region. In addition, when rapid cooling is performed to a temperature lower than 630°C, low-temperature structures such as bainite or martensite may be formed.

In the slow cooling, a phase transformation time is ensured to allow phase transformation into pearlite and ferrite. Therefore, in the slow cooling, slow cooling may be performed to a temperature 580°C at a rate of 1°C/s or less.

When the cooling rate exceeds 1°C/s, sufficient phase transformation time is not ensured, and low-temperature structures may be generated from untransformed austenite structures.

The cooled wire rod may be reheated to a temperature 900 to 980°C and then quenched.

When the reheating temperature is high, the grain size may become coarse. However, when the reheating temperature is low, pearlite may not be sufficiently reversed, leading to ferrite decarburization on the surface due to phase transformation.

The quenched wire rod may be tempered at a low temperature of 220 to 300°C, which is different from conventional quenching temperatures.

When the tempering temperature is high, the target tensile strength may not be satisfied. However, when the tempering temperature is low, the dislocation density is high, which may lead to permanent deformation due to the annihilation of mobile dislocations during a fatigue test.

Hereinafter, the present invention will be described in more detail through embodiments. However, the descriptions of the embodiments are only for illustrating the implementation of the present invention, and the present invention is not limited by the descriptions of the embodiments. This is because the scope of the rights of the present invention is determined by matters described in the scope of claims and matters reasonably inferred therefrom.

### {Examples}

For the various alloy composition ranges shown in Table 1 below, billets were prepared in a vacuum induction melting furnace. The prepared billets were subjected to solution heat treatment at 1200°C for 4 hours in a heating furnace to remove the cast structure. Thereafter, in order to produce the billet into a wire rod, welding was performed on a rear end of a 10-meter- long billet. The welded billet was subjected to finish rolling into a wire rod with a diameter of 15 mm. Next, the wire rod was rapidly cooled to a temperature of 650°C at a cooling rate of 6°C/s, slowly cooled to a temperature of 580°C at a rate of 1°C/s, and then cooled by air cooling. Thereafter, the wire rod was drawn to a diameter of 13.8 mm, reheated using an induction heating heat treatment method, and quenched. The quenched wire rod was subjected to tempering to produce a specimen.

The finish rolling temperature, reheating temperature, and tempering temperature are shown in Table 2.

**[Table 1]**

| Class. | Alloy composition (wt %) | | | | | | | | |
|---|---|---|---|---|---|---|---|---|---|
| | C | Si | Mn | P | S | Cr | Ti | B | N |
| Example 1 | 0.44 | 1.47 | 0.24 | 0.011 | 0.004 | 0.53 | 0.024 | 0.0021 | 0.004 |
| Example 2 | 0.47 | 1.62 | 0.33 | 0.009 | 0.004 | 0.72 | 0.023 | 0.0018 | 0.004 |
| Example 3 | 0.40 | 1.59 | 0.28 | 0.010 | 0.004 | 0.60 | 0.022 | 0.0022 | 0.004 |
| Example 4 | 0.44 | 1.51 | 0.35 | 0.011 | 0.004 | 0.64 | 0.022 | 0.0019 | 0.004 |
| Example 5 | 0.51 | 1.68 | 0.39 | 0.010 | 0.005 | 0.79 | 0.023 | 0.0020 | 0.004 |
| Example 6 | 0.39 | 1.49 | 0.33 | 0.010 | 0.004 | 0.71 | 0.024 | 0.0020 | 0.004 |
| Example 7 | 0.43 | 1.32 | 0.32 | 0.011 | 0.004 | 0.73 | 0.022 | 0.0020 | 0.004 |
| Example 8 | 0.39 | 1.38 | 0.23 | 0.009 | 0.004 | 0.65 | 0.024 | 0.0021 | 0.004 |
| Comparative Example 1 | **0.37** | 1.50 | 0.31 | 0.010 | 0.004 | 0.55 | 0.023 | 0.0023 | 0.004 |
| Comparative Example 2 | **0.54** | 1.49 | 0.32 | 0.011 | 0.004 | 0.56 | 0.023 | 0.0021 | 0.004 |
| Comparative Example 3 | 0.44 | **1.72** | 0.36 | 0.010 | 0.005 | 0.53 | 0.022 | 0.0020 | 0.004 |
| Comparative Example 4 | 0.45 | **1.26** | 0.31 | 0.009 | 0.004 | 0.56 | 0.022 | 0.0024 | 0.004 |
| Comparative Example 5 | 0.42 | 1.50 | **0.53** | 0.010 | 0.004 | 0.65 | 0.024 | 0.0020 | 0.004 |
| Comparative Example 6 | 0.46 | 1.48 | 0.32 | 0.011 | 0.004 | **0.48** | 0.023 | 0.0019 | 0.004 |
| Comparative Example 7 | 0.44 | 1.47 | 0.24 | 0.011 | 0.004 | 0.53 | 0.024 | 0.0021 | 0.004 |
| Comparative Example 8 | 0.44 | 1.47 | 0.24 | 0.011 | 0.004 | 0.53 | 0.024 | 0.0021 | 0.004 |
| Comparative Example 9 | 0.44 | 1.47 | 0.24 | 0.011 | 0.004 | 0.53 | 0.024 | 0.0021 | 0.004 |
| Comparative Example 10 | 0.44 | 1.47 | 0.24 | 0.011 | 0.004 | 0.53 | 0.024 | 0.0021 | 0.004 |

**[Table 2]**

| Class. | Finish Rolling Temp. (°C | Reheating Temp. (°C | Tempering Temp. (°C |
|---|---|---|---|
| Example 1 | 930 | 925 | 244 |
| Example 2 | 935 | 928 | 270 |
| Example 3 | 930 | 931 | 251 |
| Example 4 | 931 | 928 | 252 |
| Example 5 | 930 | 931 | 299 |
| Example 6 | 930 | 925 | 235 |
| Example 7 | 931 | 931 | 221 |
| Example 8 | 932 | 927 | 228 |
| Comparative Example 1 | 931 | 932 | 221 |
| Comparative Example 2 | 929 | 925 | 298 |
| Comparative Example 3 | 931 | 928 | 295 |
| Comparative Example 4 | 933 | 927 | 225 |
| Comparative Example 5 | 930 | 930 | 221 |
| Comparative Example 6 | 935 | 928 | 295 |
| Comparative Example 7 | **878** | - | - |
| Comparative Example 8 | 930 | **895** | - |
| Comparative Example 9 | 930 | 925 | **215** |
| Comparative Example 10 | 930 | 925 | **308** |

Table 3 below shows the value of Expression (1), the average thickness of carbides, the dislocation density, and the permanent deformation amount. The values of Expression (1) were calculated by Expression (1) below.

Expression (1): [Si]+1.5[Cr]/[Mn]

In Expression (1), [Si], [Cr], and [Mn] represent the content (weight %) of each component.

The average thickness of carbides was measured using transmission electron microscopy (TEM). Using a sample manufactured by the replica method, 10 random locations were measured at a magnification of 160K, and then the average thickness of regions confirmed to be carbide through compositional analysis using energy dispersive X-ray spectroscopy (EDS) was observed. Meanwhile, the average thickness of the carbides was obtained by measuring the average thickness of carbides having a thickness of 100 nm or less among precipitated carbides.

The dislocation density was measured using X ray diffraction (XRD). After measurement with Cu-Kα Radiation (40kv 40mA), 40°<2θ<100°, 0.02°/sec, the result was analyzed using convolutional multiple whole profile (CMWP) software. The detailed experimental method was based on the contents of Materials Transactions Vol.59, p.1135, 2018 by K.Murasawa.

The permanent deformation amount was measured by compressing the spring product at 1274MPa for 48 hours, and then measuring the difference in height before and after compression.

**[Table 3]**

| Class. | Expr.(1) | Carbide Average Thickness (nm) | Dislocation Density (10¹³ m⁻²) | Permanent Deformation Amount (mm) |
|---|---|---|---|---|
| Example 1 | 9.4 | 9.3 | 8.8 | 2.8 |
| Example 2 | 8.2 | 11.6 | 6.9 | 2.8 |
| Example 3 | 8.9 | 10.9 | 10.1 | 2.7 |
| Example 4 | 7.1 | 11.3 | 9.7 | 2.8 |
| Example 5 | 7.3 | 10.5 | 6.3 | 2.5 |
| Example 6 | 7.7 | 11.1 | 9.5 | 2.6 |
| Example 7 | 7.5 | 11.3 | 27 | 2.9 |
| Example 8 | 10.2 | 8.9 | 18 | 2.9 |
| Comparative Example 1 | 7.5 | 11 | **5.8** | **3.9** |
| Comparative Example 2 | 7.3 | **13.5** | 8.5 | **3.4** |
| Comparative Example 3 | **7.0** | 9.8 | **5.8** | **3.3** |
| Comparative Example 4 | **6.8** | 10.5 | **32** | **3.6** |
| Comparative Example 5 | **4.7** | - | - | Fracture **during forming** |
| Comparative Example 6 | **6.9** | **12.9** | 6.5 | **3.5** |
| Comparative Example 7 | 9.4 | - | - | - |
| Comparative Example 8 | 9.4 | - | - | - |
| Comparative Example 9 | 9.4 | - | - | **Fracture during forming** |
| Comparative Example 10 | 9.4 | - | - | **Lack of strength** |

Referring to Table 3, Examples 1 to 8 satisfied the alloy composition, the value of Expression (1), and the manufacturing method proposed in the disclosed invention. Therefore, Examples 1 to 8 satisfied the dislocation density of 6.0x10¹³ to 3.0x10¹⁴ m⁻², the average thickness of 12 nm or less for precipitated carbides having a thickness of 100 nm or less, and the permanent deformation amount of 3.0 mm or less. That is, Examples 1 to 8 had excellent permanent deformation resistance. However, Comparative Example 1 had a low C content, resulting in a low dislocation density during quenching, and thus failed to satisfy the permanent deformation amount of 3.0 mm or less. That is, Comparative Example 1 had inferior permanent deformation resistance.

Comparative Example 2 had a high content of C, and therefore the tempering temperature was increased to satisfy the formability. Therefore, Comparative Example 2 had a coarse average carbide thickness, and failed to satisfy the permanent deformation amount of 3.0 mm or less. That is, Comparative Example 2 had inferior permanent deformation resistance.

Comparative Example 3 had a high content of Si, and therefore, the tempering temperature was increased to satisfy the formability. Therefore, Comparative Example 3 did not satisfy the dislocation density of 6.0x10¹³ to 3.0x10¹⁴ m⁻² and did not satisfy the permanent deformation amount of 3.0 mm or less. That is, Comparative Example 3 had inferior permanent deformation resistance.

Comparative Example 4 had a low content of Si, and therefore the tempering temperature was lowered to obtain the target strength. Therefore, Comparative Example 4 did not satisfy the dislocation density of 6.0x10¹³ to 3.0x10¹⁴ m⁻² and did not satisfy the permanent deformation amount of 3.0 mm or less. That is, Comparative Example 4 had inferior permanent deformation resistance.

Comparative Example 5 had a high content of Mn, fracture occurred during spring forming. Therefore, Comparative Example 5 was difficult to commercially utilize.

Comparative Example 6 did not satisfy the permanent deformation amount of 3.0 mm or less due to the low Cr content and the coarse average thickness of the carbide. In other words, Comparative Example 6 had poor permanent deformation resistance.

Comparative Example 7 had a low finish rolling temperature, causing ferrite decarburization in the wire. In other words, Comparative Example 7 was difficult to commercially use.

Comparative Example 8 had a low reheating temperature, preventing pearlite from being sufficiently dissolved during quenching. Therefore, Comparative Example 8 had a large amount of pearlite remaining in the microstructure, causing structural defects. In other words, Comparative Example 8 was difficult to commercially use.

Comparative Example 9 had a low tempering temperature, resulting in fracture during spring forming. In other words, Comparative Example 9 was difficult to commercially use.

Comparative Example 10 had a high tempering temperature, and thus failed to satisfy the target strength of 1950 MPa or more.

According to an embodiment of the disclosed invention, a spring steel wire with improved permanent deformation resistance and a method of manufacturing the same may be provided as described above.

## Claims

1. A spring steel wire with improved permanent deformation resistance, comprising, in percent by weight (wt%), 0.39 to 0.51% of C, 1.30 to 1.70% of Si, 0.20 to 0.45% of Mn, 0.015% or less of P, 0.020% or less of S, 0.50 to 0.80% of Cr, 0.015 to 0.030% of Ti, 0.0010 to 0.0040% of B, 0.003 to 0.015% of N, the remainder being Fe and inevitable impurities, and
having a dislocation density of 6.0x10¹³ to 3.0x10¹⁴ m⁻².

2. The spring steel wire with improved permanent deformation resistance of claim 1, wherein a value of Expression (1) is greater than 7,
Expression (1): [Si]+1.5[Cr]/[Mn],
wherein in Expression (1), [Si], [Cr], and [Mn] represent the content (wt %) of each component.

3. The spring steel wire with improved permanent deformation resistance of claim 1, including tempered martensite as a microstructure thereof.

4. The spring steel wire with improved permanent deformation resistance of claim 1, wherein an average thickness of carbides having a thickness of 100 nm or less among precipitated carbides is 12 nm or less.

5. The spring steel wire with improved permanent deformation resistance of claim 1, having a permanent deformation of 3.0 mm or less when compressed at a strength of 1274 MPa.

6. A method of manufacturing a spring steel wire with improved permanent deformation resistance, the method comprising:
preparing a billet comprising, in percent by weight (wt%), 0.39 to 0.51% of C, 1.30 to 1.70% of Si, 0.20 to 0.45% of Mn, 0.015% or less of P, 0.020% or less of S, 0.50 to 0.80% of Cr, 0.015 to 0.030% of Ti, 0.0010 to 0.0040% of B, 0.003 to 0.015% of N, the remainder being Fe and inevitable impurities;
finish rolling the billet at 880 to 980°C to produce a wire rod;
cooling the wire rod;
reheating the cooled wire rod to a temperature of 900 to 980°C and then quenching the reheated wire rod; and
tempering the quenched wire rod at a temperature of 220 to 300°C.

7. The method of manufacturing a spring steel wire with improved permanent deformation resistance of claim 6, wherein the cooling comprises:
rapidly cooling to a temperature of 630 to 690°C at a rate of 3 to 8°C/s;
slowly cooling to a temperature of 580°C at a rate of 1°C/s or less; and
air cooling.
